# EUROPÄISCHE PATENTSCHRIFT

(11) **EP 1 800 577 B1**
(45) Veröffentlichungstag und Bekanntmachung des Hinweises auf die Patenterteilung: **09.07.2008**
(21) Anmeldenummer: 06405522.1
(22) Anmeldetag: 15.12.2006
(51) Int. Cl.: A47J 31/46

(54) **Getränkeabgabevorrichtung**
Beverage dispenser
Distributeur de boissons

(30) Priorität: 21.12.2005 CH 20252005
(43) Veröffentlichungstag der Anmeldung: 27.06.2007
(73) Patentinhaber: JURA ELEKTROAPPARATE AG, 4626 Niederbuchsiten (CH)
(72) Erfinder: Reyhanloo, Shahryar, 4573 Lohn Ammansegg (CH)
(74) Vertreter: EGLI-EUROPEAN PATENT ATTORNEYS

(56) Entgegenhaltungen:
- EP-A1- 0 107 883
- DE-C1- 3 425 943

## Beschreibung

Die Erfindung betrifft eine Getränkeabgabevorrichtung für eine Getränkebereitungsmaschine nach Patentanspruch 1 sowie eine Getränkebereitungsmaschine mit einer derartigen Getränkeabgabevorrichtung nach Patentanspruch 8.

Getränkebereitungsmaschinen, insbesondere Espressomaschinen für den Hausgebrauch oder für Kleinbetriebe, weisen heute häufig neben einem Doppelrohrauslauf eine Vorwahl für die Getränkeart, meist Kaffee oder Espresso, sowie weiterhin eine Vorwahl für die Anzahl der gewünschten Getränkeportionen, d.h. eine oder zwei Portionen, auf. Dabei ermöglicht der Doppelrohrauslauf, dass wahlweise jeweils eine oder gleichzeitig zwei Tassen des gewählten Getränkes unterstellt und befüllt werden können.

Für die Auswahl, ob eine oder zwei Portionen des gewählten Getränkes bereitet werden soll, stehen in der Regel geeignete Bedienungselemente an der Getränkebereitungsmaschine zur Verfügung, beispielsweise ein erster Auslöseknopf mit einem Piktogramm für 1 Tasse und ein zweiter Auslöseknopf mit einem Piktogramm für 2 Tassen, Drehschalter mit entsprechenden Piktogrammen u.s.w.

Die Komplexität der Bedienung einer Getränkebereitungsmaschine erhöht sich in der Regel mit der Zahl der Bedienungselemente bzw. der mit der Zahl der Bedienungselemente verbundenen Möglichkeiten hinsichtlich Auswahl und Reihenfolge. So kann eine zu grosse Zahl von Bedienungselementen von bestimmten Personengruppen als verwirrend und bedienungsunfreundlich empfunden werden und zu Fehlmanipulationen führen.

Aufgabe der Erfindung ist es deshalb, bei Getränkebereitungsmaschinen Möglichkeiten anzugeben, mit denen die Komplexität des Bedienvorganges reduziert werden kann. Insbesondere soll die Komplexität des Bedienungsvorganges bei der Wahl von einer oder zwei Getränkeportionen reduziert werden.

Diese Aufgabe wird durch die Merkmalskombinationen der Patentansprüche 1 und 8 gelöst.

Die Lösung geht davon aus, dass eine einfache, manuell durchführbare und im Resultat visuell klar erkennbare mechanische Umstellung an der Getränkeabgabevorrichtung der Getränkebereitungsmaschine zielführend ist.

Es ist deshalb vorgesehen, bei einer Getränkebereitungsmaschine eine Getränkeabgabevorrichtung mit einem Auslaufoberteil (in dem sich der Getränkeeinlauf von der Brüheinheit befindet) sowie einem mit dem Auslaufoberteil manuell drehbar verbundenen Auslaufunterteil zu versehen. Dabei ist das Auslaufunterteil manuell um 360° frei drehbar und in zwei um 180° versetzten Drehstellungen positionierbar. Die vorliegende Getränkeabgabevorrichtung ist zudem vertikal (Höhe H) verstellbar. Das Auslaufunterteil weist ein erstes, zweites und drittes Auslaufrohr auf, und das Auslaufunterteil hat zudem eine erste und eine zweite Kammer, wobei das erste und das zweite Auslaufrohr mit der zweiten Kammer in Verbindung steht und das dritte Auslaufrohr mit der ersten Kammer in Verbindung steht. In einer ersten Drehstellung des Auslaufunterteils ist der Getränkeeinlauf mit der ersten Kammer und in einer zweiten Drehstellung des Auslaufunterteils ist der Getränkeeinlauf mit der zweiten Kammer verbunden. So wird durch die manuelle Rotation des Auslaufunterteils eine Vor-Auswahl für die Abgabe von einer oder von zwei Getränkeportionen erreicht; d.h entweder die Getränkeausgabe durch das dritte Auslaufrohr (Ausgabe einer Getränkeportion) oder die Getränkeausgabe durch das erste und das zweite Auslaufrohr (Ausgabe von zwei Getränkeportionen). Da diese manuelle Dreh-Positionierung des Auslaufunterteils visuell sehr klar ersichtlich und sehr einfach zu bewerkstelligen ist (im Vordergrund erscheint gut sichtbar entweder ein einziges Auslaufrohr oder es erscheinen gut sichtbar zwei nebeneinander liegende Auslaufrohre), kann so auf entsprechende weitere Bedienungselemente zur Auswahl der Anzahl Getränkeportionen verzichtet werden. Bei einer Getränkebereitungsmaschine bedeutet dies natürlich auch, dass die Drehstellungen des Auslaufunterteiles in irgend einer Form überwacht und detektiert werden müssen, damit die Steuerungseinrichtung der Getränkebereitungsmaschine nach der Auslösung der Getränkeausgabe die Herstellung von einer oder von zwei Getränkeportionen veranlassen kann und so die gewünschte Vereinfachung der Bedienung auch erreicht wird.

Getränkeabgabevorrichtung für Getränkebereitungsmaschinen mit einem Auslaufoberteil sowie mit einem mit dem Auslaufoberteil manuell drehbar verbundenen Auslaufunterteil und zwei Auslaufrohren sind an sich bekannt, so z.B. in der DE-34 25 943. Allerdings dient hier die manuelle Drehbarkeit des Auslaufunterteils einem anderen Zweck, nämlich der manuellen Einstellung des Abstandes der beiden Auslauföffnungen.

Weiterhin ist aus der DE-102 39 594-A1 eine Abgabevorrichtung für Getränke bekannt, bei der ein Auslaufblock zwei Fülleinrichtungen (Auslaufrohre) umfasst, unter denen jeweils eine oder zwei Tassen aufgestellt werden können und die je nach Getränkewahl und Portionenwahl sowie entsprechender Einstellung zweier Bahnscheiben einzeln oder gemeinsam genutzt werden können. Allerdings handelt es sich hier um eine motorisch angetriebene Vorrichtung mit horizontal orientierter Drehachse, für die keine manuelle Einstellmöglichkeit vorgesehen ist und die angesichts der Komplexität der Betriebsmöglichkeiten auch nicht für manuellen Betrieb unter dem Gesichtspunkt einer klareren Übersicht für die ins Auge gefasste Benutzergruppe geeignet wäre. Hingegen zeigt diese Offenbarung auch eine vertikale Einstellmöglichkeit der Getränkeabgabevorrichtung.

Die Vorteile der erfindungsgemässen Lösung bestehen somit vor allem in der Einfachkeit der vorgeschlagenen Lösung. Im Gegensatz zu den bekannten Lösungen sind keine elektrisch oder motorisch betätigbaren Ventile oder Wegesteuerungen erforderlich.

Durch die Optimierung des Einerauslaufs/Zweierauslaufs betreffs Querschnitt und Auslaufeigenschaft wird die Qualität des Kaffees verbessert. Dadurch kann also je nach Wahl von einer oder zwei Tassen bzw. Getränkeportionen der optimale Auslauf des Produktes gewährleistet werden.

Die vom Benutzer erforderlichen Manipulationen sind bei der erfindungsgemässen Lösung so einfach und offensichtlich, dass Fehlmanipulationen praktisch ausgeschlossen sind. So kann das drehbare Auslaufunterteil in beliebige Richtungen frei um 360° drehbar angeordnet sein (d.h. es ist völlig unkritisch, ob der Anwender die neue Position über eine Rechts- oder über eine Linksdrehung erreicht), und die Detektierung der "richtigen" Drehstellungen, vorzugsweise im Kombination mit mechanisch eindeutig indentifizierbaren "Einraststellungen" kann durch eine dem Benutzer unter Umständen sogar verborgene Drehstellungsüberwachungseinrichtung vorgenommen werden und an die zentrale Steuerungseinrichtung der Getränkebereitungsmaschine übermittelt werden.

Somit ermöglicht die erfindungsgemässe Getränkeabgabevorrichtung mit manuell drehbarem Auslaufunterteil grundsätzlich auch den Bau einer einfachen Getränkebereitungsmaschine mit "Einknopfbetrieb". Der Begriff "Einknopfbetrieb" ist dabei so zu verstehen, dass es möglich sein soll, eine Kaffee- oder Espressomaschine mit nur einem Bedien- bzw. Auslöseknopf zu bauen, die gleichwohl aber die Ausgabe von einem oder zwei Portionen Kaffee oder Espresso erlaubt. Um die Wahl hinsichtlich der Ausgabe von einer oder von zwei Portionen zu treffen, muss der Anwender vorgängig am Auslaufunterteil lediglich die Anzahl der im Vordergrund sichtbaren Auslaufrohre (erste Drehstellung oder zweite Drehstellung gemäss Detailbeschreibung) wählen.

Selbstverständlich kann das Konzept der "Einknopfbedienung" insofern noch erweitert und verfeinert werden, als der "einzige" Bedienknopf beispielsweise auch ein Drehwahlschalter mit zwei Stellungen (z.B. eine für Kaffee und eine für Espresso) und mit eingebauter zusätzlicher Drucktaste sein kann. Von aussen sichtbar ist auch in diesem Fall nur ein einziges Bedienelement. Auf diese Weise lässt sich das Konzept auf verschiedene Getränkearten ausbauen und trotz der Vielfalt der Wahlmöglichkeiten hinsichtlich von Art und Menge der auszugebenden Getränke kann die Bedienung äusserst einfach und für praktisch alle Benutzergruppen übersichtlich und klar gehalten werden. Zudem sind Fehlbedienungen kaum mehr möglich. Zur Unterstützung der Bedienungssicherheit kann natürlich zusätzlich auch noch eine Anzeige zur Darstellung von Hinweisen auf die aktuelle Auswahl vorgesehen sein.

Im folgenden wird die Erfindung anhand eines Beispieles mit Zeichnungen näher erläutert.

In den Zeichnungen zeigt:
- Fig. 1: eine schematische Seitenansicht einer Getränkebereitungsmaschine mit einer erfindungsgemässen Getränkeabgabevorrichtung,
- Fig. 2a: eine schematische Draufsicht auf das drehbare Auslaufunterteil der Getränkeabgabevorrichtung in Fig. 1 in der Stellung für die Abgabe von einer Getränkeportion, und
- Fig. 2b: eine schematische Draufsicht auf das drehbare Auslaufunterteil der Getränkeabgabevorrichtung in Fig. 1 in der Stellung für die Abgabe von zwei Getränkeportionen.

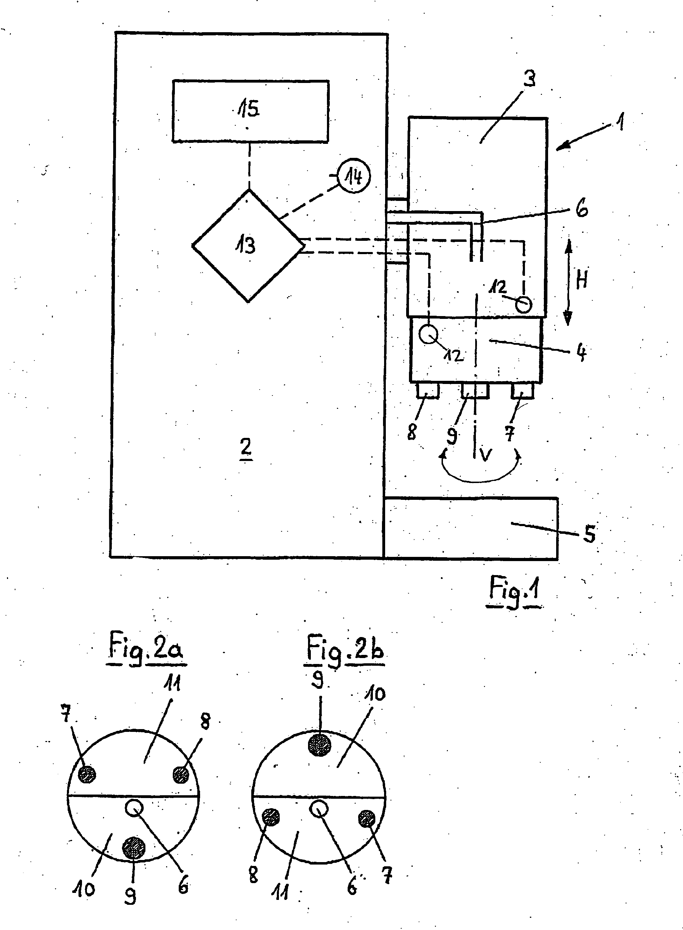

Die Fig. 1 zeigt eine stark schematisierte Seitenansicht einer Getränkebereitungsmaschine mit einer erfindungsgemässen Getränkeabgabevorrichtung 1. Die Getränkeabgabevorrichtung 1 ist am Körper 2 einer Getränkebereitungsmaschine angebracht oder anbringbar, und besteht aus einem Auslaufoberteil 3 und einem Auslaufunterteil 4. Die Getränkeabgabevorrichtung 1, oder zumindest Teile davon, können in einer Höhe H verstellbar sein. Die Getränkeabgabevorrichtung ist dabei über einem Fuss 5 angeordnet, auf dem Behälter wie beispielsweise Tassen oder Becher zwecks Abfüllung mit einem Getränk aufgestellt sein können.

Der Auslaufunterteil 4 ist dabei manuell um eine im wesentlichen vertikale Achse V frei drehbar mit dem Auslaufoberteil 3 verbunden. Vorzugsweise ist das Auslaufunterteil 4 dabei in beliebige Richtungen, d.h. vorwärts und rückwärts, um 360° frei drehbar angeordnet. Das Auslaufoberteil weist einen Getränkeinlauf 6 auf, mit dem es mit einer im Körper 2 der Getränkebereitungsmaschine angeordneten (nicht dargestellten) Getränkebereitungseinheit verbunden ist. Durch den Getränkeeinlauf 6 kann ein von der Getränkebereitungseinheit bereitetes Getränk, beispielsweise Kaffee oder Espresso, in den Auslaufoberteil 3 der Getränkeabgabevorrichtung 1 fliessen.

Das Auslaufunterteil 4 weist ein erstes Auslaufrohr 7, ein zweites Auslaufrohr 8 und ein drittes Auslaufrohr 9 auf, durch die ein erzeugtes Getränk in das/die unterstellte(n) (nicht dargestellten) Gefäss(e) ausfliessen kann. Das Auslaufunterteil 4 ist in zwei um 180° versetzten Drehstellungen positionierbar bzw. einrastbar. Diese zwei Drehstellungen sind in den Figuren 2a und 2b illustriert. Im Detail zeigen die Figuren 2a und 2b den Auslaufunterteil 4 in einer ersten und in einer zweiten Drehstellung und in einer Sichtweise wie sie ein Anwender sehen würde, wenn er vor der Getränkebereitungsmaschine steht.

Das Auslaufunterteil 4 ist zudem unterteilt und hat eine erste Kammer 10 und eine zweite Kammer 11, wobei das erste und das zweite Auslaufrohr 7,8 mit der zweiten Kammer 11 in Verbindung stehen, und das dritte Auslaufrohr 9 mit der ersten Kammer 10 in Verbindung steht.

In der ersten Drehstellung des Auslaufunterteils 4 (vgl. Fig. 2a) ist der Getränkeeinlauf 6 mit der ersten Kammer 10 und dem dritten Auslaufrohr 9 verbunden. In der ersten Drehstellung ist die Getränkeabgabevorrichtung 1 zur Abgabe von einer Portion eines Getränkes vorgesehen.

In der zweiten (um 180° versetzten) Drehstellung des Auslaufteiles 4 (vgl. Fig. 2b) ist der Getränkeeinlauf 6 mit der zweiten Kammer 11 sowie dem ersten und zweiten Auslaufrohr 7,8 verbunden. In der zweiten Drehstellung ist die Getränkeabgabevorrichtung 1 zur Abgabe von zwei Portionen eines Getränkes vorgesehen.

Für einen Benutzer einer Getränkebereitungsmaschine mit der erfindungsgemässen Getränkeabgabevorrichtung 1 ist die oben beschriebene manuelle freie Dreh-Positionierung des Auslaufunterteils visuell stets sehr klar ersichtlich und sehr einfach zu bewerkstelligen. Im Vordergrund erscheint gut sichtbar entweder ein einziges Auslaufrohr oder zwei nebeneinander liegende Auslaufrohre. Bei Bedarf können noch zusätzliche visuelle Hilfen, z.B. Beschriftungen oder Display-Anzeigen verwendet werden.

Zum besseren Verständnis sei noch erwähnt, dass in der Fig. 1 lediglich in schematischer Weise eine (nicht-funktionale) Zwischen-Drehstellung des Auslaufunterteils 4 dargestellt ist und der Getränkeeinlauf 6 im Auslaufoberteil 3 natürlich so angeordnet ist, dass in den zwei Drehstellungen jeweils eine eindeutige Zufluss-Zuordnung zur ersten oder zur zweiten Kammer 10,11, wie in den Fig. 2a und 2b gezeigt, besteht.

Der volle Nutzen der erfindungsgemässen Getränkeabgabevorrichtung 1 wird natürlich dann erreicht, wenn die Getränkeabgabevorrichtung 1 (wie im vorliegenden Beispiel) mit einer Getränkebereitungsmaschine kombiniert ist und eine Drehstellungsüberwachung für die Drehstellungen (erste Drehstellung und zweite Drehstellung) des Auslaufunterteils 4 vorhanden ist. Vorzugsweise umfasst die Drehstellungsüberwachungseinrichtung dazu mindestens einen Sensor 12. Dabei kann die Drehstellungsüberwachungseinrichtung im Auslaufoberteil 3 und/oder im Auslaufunterteil 4 angeordnet sein. Für jede der beiden Drehstellungen (erste Drehstellung und zweite Drehstellung) kann ein separater Sensor 12 vorhanden sein. Da es jedoch auch Sensoren gibt, die mehrere Zustände erfassen oder erkennen können, genügt es in manchen Fällen auch, einen einzelnen Sensor vorzusehen. Die Drehstellungsüberwachungseinrichtung kann im Auslaufoberteil 3 oder auch am Körper 2 der Getränkebereitungsmaschine angebracht sein.

Die Drehstellungsüberwachungseinrichtung ist mit einer Steuerungseinrichtung 13 der Getränkebereitungsmaschine verbunden. Mit Hilfe der Steuerungseinrichtung 13 wird die durch den Getränkeeinlauf 6 an die Getränkeabgabevorrichtung 1 abgegebene Getränkemenge in Abhängigkeit von der detektierten Drehstellung (erste Drehstellung und zweite Drehstellung) gesteuert.

Die Getränkebereitungsmaschine verfügt zudem über mindestens einen Bedienungsknopf 14 sowie eine Anzeige 15.

Nachdem der Benutzer einer derartigen Getränkebereitungsmaschine über die Wahl der Drehstellung (erste Drehstellung und zweite Drehstellung) des Auslaufunterteils 4 eine Vorwahl bezüglich der ,Anzahl Getränkeportionen pro Getränkebezug' getroffen hat, kann die Herstellung und der Bezug des Getränkes (Kaffee oder Espresso oder dergleichen) durch Betätigung des Bedienungsknopfes 14 ausgelöst werden.

Für die Auswahl der Getränkeart (z.B. Kaffee oder Espresso) kann vorgesehen sein, dass die Getränkebereitungsmaschine zu diesem Zweck entweder weitere separate Bedienelemente (Auswahlknöpfe, Schalter etc.) aufweist, oder dass der Bedienungsknopf 14 zur Einstellung und/oder Auslösung verschiedener Funktionen ausgebildet ist. Letzteres ist zum Beispiel der Fall, wenn der Bedienungsknopf 14 als Drehwahlschalter mit eingebauter Drucktaste ausgebildet ist. Auf diese Weise lassen sich erfindungsgemäss besonders einfach zu bedienende Getränkebereitungsmaschinen mit nur einem einzigen Bedienungsknopf realisieren. Zusätzlich kann die Bedienungsfreundlichkeit noch mit geeigneten Displays an der Anzeige 15 verbessert werden.

### Bezugsziffernliste:

- 1: Getränkeabgabevorrichtung
- 2: Körper (einer Getränkebereitungsmaschine)
- 3: Auslaufoberteil
- 4: Auslaufunterteil
- 5: Fuss
- 6: Getränkeeinlauf
- 7: erstes Auslaufrohr
- 8: zweites Auslaufrohr
- 9: drittes Auslaufrohr
- 10: erste Kammer
- 11: zweite Kammer
- 12: Sensor
- 13: Steuerungseinrichtung
- 14: Bedienungsknopf
- 15: Anzeige

- V: Vertikale Achse
- H: Höhe

## Patentansprüche

1. Getränkeabgabevorrichtung (1) für eine Getränkebereitungsmaschine, wobei die Getränkeabgabevorrichtung (1) ein Auslaufoberteil (3) mit einem Getränkeeinlauf (6) sowie ein mit dem Auslaufoberteil (3) manuell drehbar verbundenes Auslaufunterteil (4) mit mindestens zwei Auslaufrohren aufweist,
**dadurch gekennzeichnet, dass**
- das Auslaufunterteil (4) in zwei um 180° versetzten Drehstellungen positionierbar mit dem Auslaufoberteil (3) verbunden ist,
- am Auslaufunterteil (4) ein erstes, zweites und drittes Auslaufrohr (7,8,9) angebracht ist,
- das Auslaufunterteil (4) eine erste und eine zweite Kammer (10,11) aufweist, wobei das erste und das zweite Auslaufrohr (7,8) mit der zweiten Kammer (11) in Verbindung steht und das dritte Auslaufrohr (9) mit der ersten Kammer (10) in Verbindung steht,
und wobei
der Getränkeeinlauf (6) in einer ersten Drehstellung des Auslaufunterteils (4) mit der ersten Kammer (10) und in einer zweiten Drehstellung des Auslaufunterteils (4) mit der zweiten Kammer (11) verbunden ist.

2. Getränkeabgabevorrichtung (1) nach Patentanspruch 1, **dadurch gekennzeichnet, dass** das Auslaufunterteil (4) vorwärts oder rückwärts um 360° um eine im wesentlichen vertikale Achse V frei drehbar angeordnet ist.

3. Getränkeabgabevorrichtung (1) nach Patentanspruch 1 oder 2, **dadurch gekennzeichnet, dass** eine Drehstellungsüberwachungseinrichtung für die Drehstellungen des Auslaufunterteiles (4) vorhanden ist, womit die Positionierung des Auslaufunterteiles (4) in der ersten und in der zweiten Drehstellung detektierbar ist.

4. Getränkeabgabevorrichtung (1) nach Patentanspruch 3, **dadurch gekennzeichnet, dass** die Drehstellungsüberwachungseinrichtung im Auslaufoberteil (3) und/oder im Auslaufunterteil (4) angeordnet ist.

5. Getränkeabgabevorrichtung (1) nach Patentanspruch 3 oder 4, **dadurch gekennzeichnet, dass** die Drehstellungsüberwachungseinrichtung mindestens einen Sensor (12) umfasst.

6. Getränkeabgabevorrichtung (1) nach einem der Patentansprüche 3 bis 5, **dadurch gekennzeichnet, dass** die Drehstellungsüberwachungseinrichtung mit einer Steuerungseinrichtung (13) der Getränkebereitungsmaschine verbindbar ist, wobei die Steuerungseinrichtung (13) dazu vorgesehen ist, die durch den Getränkeeinlauf (6) an die Getränkeabgabevorrichtung (1) abgegebene Getränkemenge in Abhängigkeit von der detektierten Drehstellung des Auslaufunterteils (4) zu steuern.

7. Getränkeabgabevorrichtung (1) nach einem der Patentansprüche 1 bis 6, **dadurch gekennzeichnet, dass** die Getränkeabgabevorrichtung (1) zur höhenverstellbaren Anordnung an der Getränkebereitungsmaschine ausgebildet ist.

8. Getränkebereitungsmaschine mit einer Getränkeabgabevorrichtung (1) nach Patentanspruch 6 sowie einer Steuerungseinrichtung (13), **dadurch gekennzeichnet, dass** die Steuerungseinrichtung (13) dazu ausgelegt ist, die durch den Getränkeeinlauf (6) an die Getränkeabgabevorrichtung (1) abgegebene Getränkemenge in Abhängigkeit von der detektierten Drehstellung des Auslaufunterteils (4) zu steuern und die Getränkebereitungsmaschine mit einem einzigen Bedienungsknopf (14) zur Auslösung des Getränkeausgabevorganges versehen ist.

9. Getränkebereitungsmaschine nach Patentanspruch 8, **dadurch gekennzeichnet, dass** der einzige Bedienungsknopf (14) zur Einstellung und/oder Auslösung verschiedener Funktionen ausgebildet ist.

10. Getränkebereitungsmaschine nach Patentanspruch 9, **dadurch gekennzeichnet, dass** der einzige Bedienungsknopf (14) als Drehwahlschalter mit eingebauter Drucktaste ausgebildet ist.

11. Getränkebereitungsmaschine nach einem der Patentansprüche 8 bis 10, **dadurch gekennzeichnet, dass** neben dem einzigen Bedienungsknopf (14) noch eine Anzeige (15) vorhanden ist.

## Claims

1. A beverage dispensing apparatus (1) for a beverage preparation machine, wherein the beverage dispensing apparatus (1) includes an outlet top part (3) with a beverage inlet (6) and an outlet bottom part (4) manually turnable connected with the outlet top part (3) and with at least two outlet pipes,
**characterized in that**
- the outlet bottom part (4) is connected with the outlet top part (3) in two turn positions positionable by 180° offset,
- to the outlet bottom part (4) a first, second and third outlet pipe (7, 8, 9) is attached,
- the outlet bottom part (4) includes a first and a second chamber (10, 11), wherein the first and the second outlet pipe (7, 8) are connected with the second chamber (11) and the third outlet pipe (9) is connected with the first chamber (10),
and wherein
the beverage inlet (6) is connected with the first chamber (10) in a first turn position of the outlet bottom part (4) and with the second chamber (11) in a second turn position of the outlet bottom (4).

2. The beverage dispensing apparatus (1) according to claim 1, **characterized in that** the outlet bottom part (4) is arranged forward or backward freely turnable by 360° around a substantially vertical axis V.

3. The beverage dispensing apparatus (1) according to claim 1 or 2, **characterized in that** a turn position monitoring unit for the turn positions of the outlet bottom part (4) is available, whereby the positioning of the outlet bottom part (4) is detectable in the first and in the second turn position.

4. The beverage dispensing apparatus (1) according to claim 3, **characterized in that** the turn position monitoring unit is arranged in the outlet top part (3) and/or in the outlet bottom part (4).

5. The beverage dispensing apparatus (1) according to claim 3 or 4, **characterized in that** the turn position monitoring unit comprises at least one sensor (12).

6. The beverage dispensing apparatus (1) according to any one of the claims 3 to 5, **characterized in that** the turn position monitoring unit is connectable with a control unit (13) of the beverage preparation machine, wherein the control unit (13) is provided to control the beverage amount dispensed by the beverage inlet (6) to the beverage dispensing apparatus (1) depending on the detected turn position of the outlet bottom part (4).

7. The beverage dispensing apparatus (1) according to any one of the claims 1 to 6, **characterized in that** the beverage dispensing apparatus (1) is designed for height adjustable arrangement at the beverage preparation machine.

8. A beverage preparation machine including a beverage dispensing apparatus (1) according to claim 6 and a control unit (13), **characterized in that** the control unit (13) is designed to control the beverage amount dispensed by the beverage inlet (6) to the beverage dispensing apparatus (1) depending on the detected turn position of the outlet bottom part (4) and the beverage preparation machine is provided with a single control knob (14) for initiating the beverage dispensing process.

9. The beverage preparation machine according to claim 8, **characterized in that** the single control knob (14) is designed for setting and/or initiating different functions.

10. The beverage preparation machine according to claim 9, **characterized in that** the single control knob (14) is designed as turn selector switch with integrated push button.

11. The beverage preparation machine according to any one of the claims 8 to 10, **characterized in that** besides the single control knob (14) also a display (15) is available.

## Revendications

1. Système de distribution de boissons (1) pour une machine à préparer les boissons (1), le système de distribution de boissons comportant une partie supérieure de sortie (3) avec une entrée de boisson (6) ainsi qu'une partie inférieure de sortie (4) manuellement rotative avec la partie supérieure de sortie (3), avec au moins deux tubes de sortie,
**caractérisé en ce que**,
- la partie inférieure de sortie (4) est reliée à la partie supérieure de sortie (3) en étant positionnable dans deux positions de rotation déportées de 180°,
- un premier, un deuxième et un troisième tube de sortie (7, 8, 9) est monté sur la partie inférieure de sortie (4),
- la partie inférieure de sortie (4) comporte un premier et un deuxième compartiment (10, 11) le premier et le deuxième tube de sortie (7, 8) étant en liaison avec le deuxième compartiment (11) et le troisième tube de sortie (9) étant en liaison avec le premier compartiment (10) et
- dans une première position en rotation de la partie inférieure de sortie (4), l'entrée de boisson (6) est reliée avec la première chambre (10) et dans une deuxième position en rotation de la partie inférieure de sortie (4), elle est reliée avec la deuxième chambre (11).

2. Système de distribution de boissons (1) selon la revendication 1, **caractérisé en ce que** la partie inférieure de sortie (4) est disposée en étant librement rotative de 360° vers l'avant ou vers l'arrière, autour d'un axe V sensiblement vertical.

3. Système de distribution de boissons (1) selon la revendication 1 ou 2, **caractérisé en ce qu'**un dispositif de surveillance de la position en rotation pour les positions en rotation de la partie inférieure de sortie (4) est présent, avec lequel le positionnement de la partie inférieure de sortie (4) dans la première et dans la deuxième position en rotation est détectable.

4. Système de distribution de boissons (1) selon la revendication 3, **caractérisé en ce que** le dispositif de surveillance de la position en rotation est disposé dans la partie supérieure de sortie (3) et/ou dans la partie inférieure de sortie (4).

5. Système de distribution de boissons (1) selon la revendication 3 ou 4, **caractérisé en ce que** le dispositif de surveillance de la position en rotation comprend au moins un capteur (12).

6. Système de distribution de boissons (1) selon l'une quelconque des revendications 3 à 5, **caractérisé en ce que** le dispositif de surveillance de la position en rotation est susceptible d'être relié avec un dispositif de commande (13) de la machine pour préparer des boissons, le dispositif de commande (13) étant prévu pour commander la quantité de boisson délivrée au système de distribution de boissons (1), en fonction de la position en rotation détectée de la partie inférieure de sortie (4).

7. Système de distribution de boissons (1) selon l'une quelconque des revendications 1 à 6, **caractérisé en ce que** le système de distribution de boissons (1) est réalisé pour une disposition réglable en hauteur sur la machine à préparer les boissons.

8. Machine à préparer les boissons avec un système de distribution de boissons (1) selon la revendication 6, ainsi qu'avec un dispositif de commande (13), **caractérisé en ce que** le dispositif de commande (13) est conçu pour commander la quantité de boisson délivrée au système de distribution de boissons (1) par l'intermédiaire de l'entrée de boissons (6) en fonction de la position en rotation détectée de la partie inférieure de sortie (4) et **en ce que** la machine pour préparer les boissons est munie d'un seul bouton de commande (14) pour déclencher le processus de délivrance des boissons.

9. Machine à préparer les boissons selon la revendication 8, **caractérisée en ce que** le seul bouton de commande (14) est réalisé pour le réglage et/ou pour le déclenchement de plusieurs fonctions.

10. Machine à préparer les boissons selon la revendication 9, **caractérisée en ce que** le seul bouton de commande (14) est réalisé sous la forme d'un sélecteur rotatif, avec bouton poussoir intégré.

11. Machine à préparer les boissons selon l'une quelconque des revendications 8 à 10, **caractérisée en ce que** parallèlement au seul bouton de commande (14), il existe encore un affichage (15).
